# EUROPEAN PATENT SPECIFICATION

(11) **EP 0 441 422 B1**
(45) Date of publication and mention of the grant of the patent: **28.06.1995**
(21) Application number: 91200120.3
(22) Date of filing: 22.01.1991
(51) Int. Cl.: A01G 9/10

(54) **Germination tray**
Keimbehälter
Plateau de germination

(30) Priority: 08.02.1990 IT 4681190; 02.05.1990 IT 4683190
(43) Date of publication of application: 14.08.1991
(73) Proprietor: POLISETTE S.R.L., 43038 Sala Baganza (Parma) (IT)
(72) Inventor: Azzali, Marcello, I-43038 Sala Baganza (Parma) (IT)
(74) Representative: Corradini, Corrado

(56) References cited:
- WO-A-88/03747
- DE-B- 2 259 467
- FR-A- 2 145 024
- FR-A- 2 354 700
- NL-A- 7 908 582
- US-A- 4 854 075

## Description

This invention relates to a tray, commonly known as a seeder, suitable for the germination of seeds in general.

For the germination of seeds in general, trays of a convenient material, such as an expanded synthetic material, have been long known, consisting of a normally right angled plate comprising a series of uniformly distributed cells. The cells are intended to receive a suitable growth material (such as peat or mould), and at least one seed possibly covered with a material different from this latter. In said trays the cells taper towards their base, where a hole is provided for the discharge of the irrigation water and for the insertion of mechanical extractors for removing the plants, especially those which do not have a stem or stalk, such as salad plants. In addition, a series of spacers are provided along the upper or lower perimetral edge of the trays.

Because of these spacers the trays can be stacked during the seed germination, air then flowing naturally in a horizontal direction through the spaces between pairs of superposed trays.

FR-A-2145024 which corresponds to the preamble of claim 1 discloses an integral tray, intended for the exhibition of flowers, having upwardly flared cells 2 provided at their bottom with water discharge holes, and alternate downwardly flared openings 3 connecting the opposed surfaces of the tray. The cells 2 are intended to receive a flower pot. The tray disclosed in said French document may be, of course, used at the germination stage, when the plants have a very little foliage development. In such a stage, however, the tray cannot be stacked because the aeration of foliage is prevented. By consequence, when the tray is used in the germination stage, with the trays stacked together, the provision of spacer means between the trays is a must, in order to ensure some ventilation.

However the aforesaid known trays have proved unsatisfactory for the following reasons.

Firstly, the natural horizontal air flow is particularly slow and/or difficult, resulting in the creation of diverse streams and/or non-uniform flow, with non-optimum and/or irregular and sometimes insufficient aeration of the seeding cells and hence of the seeds themselves.

In particular, the aeration is insufficient when the stacks of trays are relatively close together and/or are placed against solid structures such as walls.

Basically, said aeration by horizontal flow can result in non-uniform germination and/or retarded germination of the seeds.

These known trays have also proved unsatisfactory in that the roots generated by the seeds extend in a regular (or rather natural) manner only during the initial part of the germination, after which on reaching the wall of the corresponding cell they are obliged to follow said wall so that they twist together and wind along the wall. The roots therefore form a sort of cup in the shape of the cell, becoming increasingly dense as the plant develops.

For this reason the plant can be said to be "imprisoned" in the sense that it has difficulty in growing compared with the situation if the same plant had been planted in the ground.

This difficult or delayed growth has been proved by tests, by comparing plants germinated in said seeders with plants germinated in the ground.

This is mainly due to said sort of cup which, consisting of a dense web of crossed roots, tightly wraps the mass of peat (or mould), to thus prevent the new roots from extending in a natural and/or regular manner when the plant has been transplanted.

In addition, the more the peripheral mass of roots increases, the more they push against the cell wall, so that the roots increasingly tend to adapt to the roughness or irregularities of said wall and remain clinging to it. Because of this clinging it is difficult to extract the plant, whether by pushing it from below through the drainage hole or by gripping it from the top and then pulling it. Specifically, in the first case (pushing) the extractor acts only on the properly ordered but poorly resistant roots and not on said web, with possible serious damage to the entire plant. In the second case (pulling) it can happen that the clinging force can exceed either the strength of the plant stem or the strength of its central root system, with obvious consequences.

In either case, when transplanted, a plant with such a cup-shaped root system is not in an optimum nutrient or growth condition.

The main object of the present invention is to provide a germination tray which overcomes the aforesaid drawbacks within the context of a simple and rational design.

Said object is attained by a tray according to claim 1.

According to the invention said plate cavities are through cavities having an enlarged lower mouth which partly overlies the surrounding cells of the underlying plate.

Said through cavities each form a passage channel through which air flows vertically in a natural manner.

This happens both when the tray rests on a flat support (ie during sprouting) and when the tray is stacked with others (germination). In this respect, in the latter case the through cavities in the stacked trays are vertically aligned and the lower enlarged mouths of the cavities of each tray keep the cavities constantly connected to the corresponding surrounding group of cells of the underlying tray.

Basically, by virtue of said natural ventilation in the vertical direction the cells are aerated in a complete and/or optimum manner, so that seed germination and subsequent sprouting take place regularly within the scheduled time. This has been confirmed by germination/sprouting tests cried out on prototypes of the tray in question.

Moreover, said constant connection between the seeding cells and the through cavities means that the tray can be constructed in perfectly flat plate form, ie without spacers, so obtaining further advantages.

A first advantage is that the tray of the invention has a smaller thickness than the corresponding type of tray provided with spacers, so that full use can be made of the available space in the germination environment (stacked trays).

A further advantage is that with a perfectly flat tray germination can also be effected outdoors, as explained hereinafter.

In a further embodiment, each cell of the plate communicates with the surrounding cavities via transverse apertures.

Said through apertures enable practically all the plant roots to assume a natural radial arrangement about the central germination body, at least at their free ends.

In this manner, when the plants have been transplanted they grow in a virtually natural manner, and thus more rapidly and with improved characteristics.

Such faster growth means that the producers concerned are able to attain higher productivity for a given available or useful surface area.

Moreover the provision of said through apertures enables material to be saved without inconveniently reducing the strength of the tray.

The characteristics and constructional merits of the invention will be apparent from the detailed description given hereinafter with reference to the accompanying figures which illustrate some preferred embodiments thereof by way of non-limiting example.

Figure 1 is a perspective cut-away view of a first embodiment of the invention.

Figure 2 is a section on the line II-II of Figure 1 to an enlarged scale, the tray being shown superposed on another identical tray.

Figure 3 is a partial view of Figure 1 from above, to an enlarged scale.

Figure 4 is an enlarged detail of Figure 1, but representing a further embodiment of the invention.

Figure 5 is a section on the line V-V of Figure 4.

Figure 6 is a perspective cut-away view of a further embodiment of the tray.

Figure 7 is a section on the line VII-VII of Figure 6 to an enlarged scale, the tray being shown superposed on another identical tray.

Figure 8 is a partial view of Figure 6 from above.

Figures 9 and 10 show a stack of trays in accordance with the embodiments shown in Figures 1 to 8, said stack being associated with means to enable the seeds to be germinated outdoors.

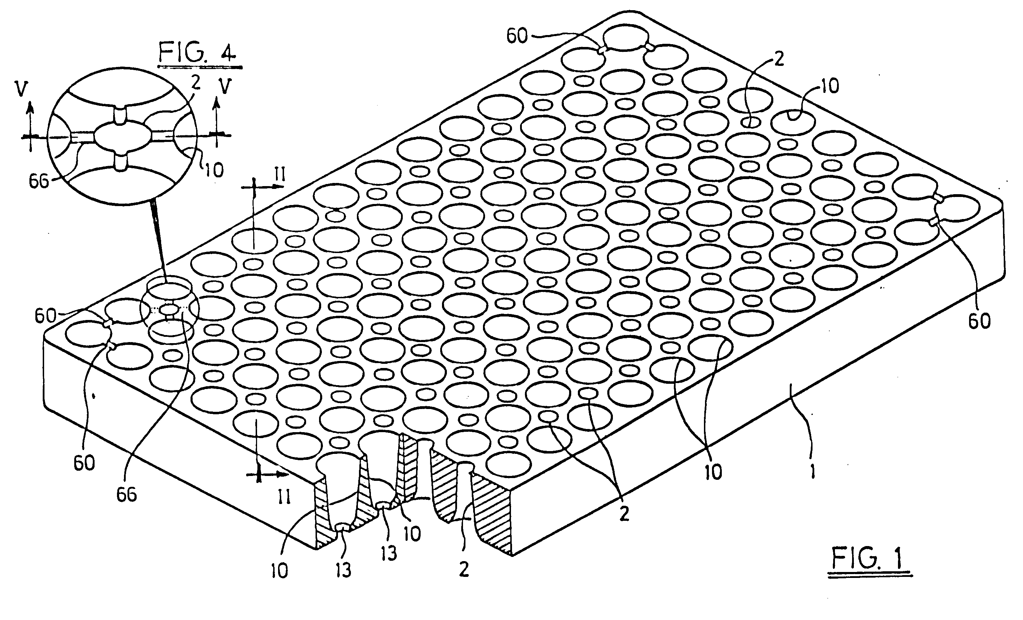

Said figures, and in particular Figures 1 to 6, show a right-angled and in this specific case rectangular plate 1 of constant thickness, constructed by thermoforming from beads of an expandable synthetic material such as polystyrene. It should however be noted that other materials and methods can be used.

Said plate 1 comprises a plurality of seeding cells 10 distributed regularly in perpendicular rows and columns.

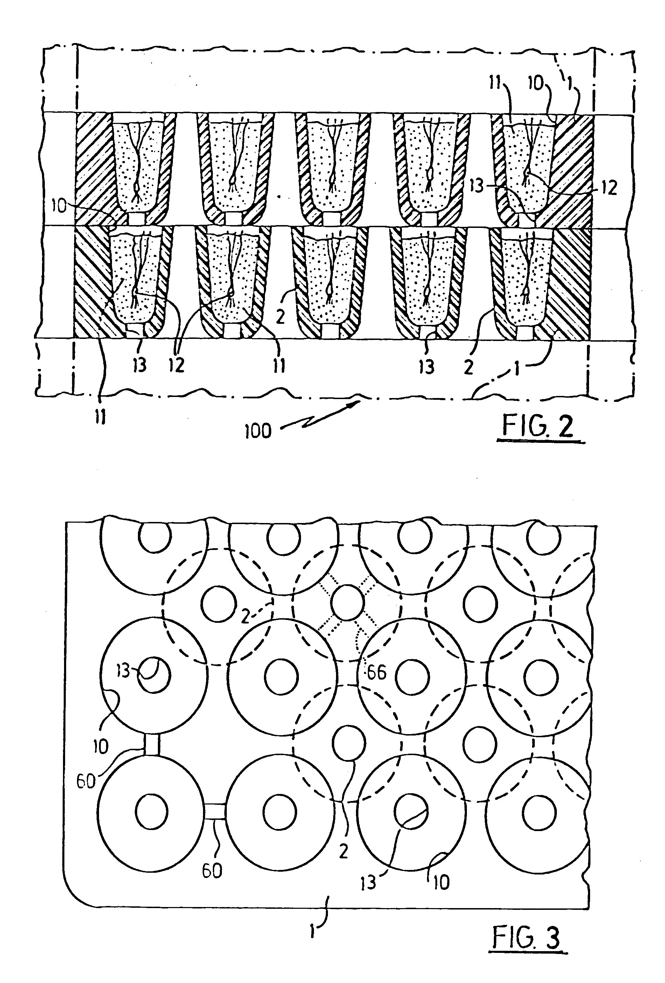

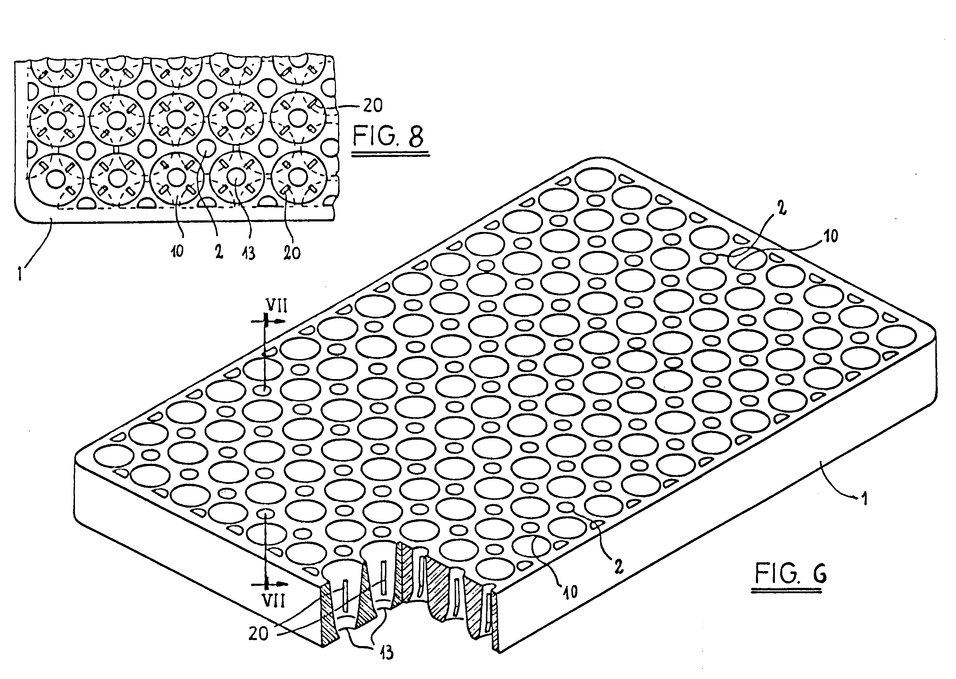

Each seeding cell 10 is intended to receive a mass of growth material 11 (see Figures 2, 7,) such as peat or mould, and at least one seed 12 which can also be covered with a material different from the preceding.

In the illustrated case the cells 10 are of frusto-conical shape with their major base facing upwards (see Figures 1, 2, 5, 6, 7, 11) but there is nothing to prevent them being of another shape, such as of square cross-section.

What is important is that said cells be slightly flared upwards, said cells 10 being provided lowerly with a central hole 13 for the discharge of irrigation water. As can be seen from Figures 1 to 7, according to the invention a plurality of through cavities 2 are interposed between the cells 10, they being also of frusto-conical shape but being flared in the opposite direction to the preceding.

More specifically, in a first embodiment the through cavities 2 are shaped in the manner of a trumpet (Figures 1, 2, 6, 7, 11), but there is nothing to prevent these assuming different shapes from that shown. What is important is that each each cavity 2, the upper mouth of which lies between four cells 10 (Figures 1, 3, 6, 8), has the characteristic specified hereinafter with reference to Figures 2, 3, 7 and 8.

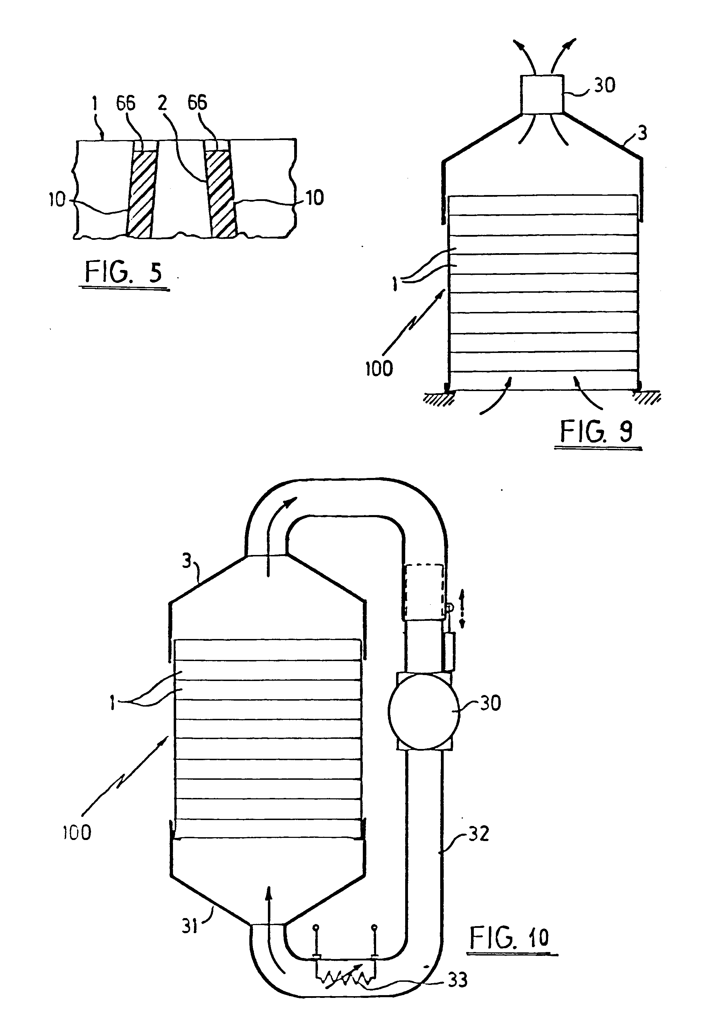

Said characteristic is that the perimetral shape of the lower mouth of each cavity 2 must, when the tray is viewed from above as in Figures 3 and 8, intersect the surrounding group of cells 10.

In other words, when the tray 1 is stacked together with other trays 1 to form a stack 100 as indicated in Figures 2 and 7, the following situation prevails:
- the lower face of a tray 1 tallies with the upper face of the underlying tray,
- the cells 10 are vertically aligned and are separated from the environment at the outer faces of the stack 100,
- the through cavities 2 are coaxial and thus connected together in a vertical direction to form channels for the flow of air, and
- each cavity 2 of a tray 1 communicates at its lower enlarged mouth with four cells 10 of the underlying tray.

It is thus apparent that the cavities 2 provide vertical aeration, with all the advantages stated in the introduction.

It should be noted that the stack 100 (during germination of the seeds 12) or the individual trays 1 (during the subsequent sprouting) must be placed on a structure which enables air to rise naturally through said cavities 2.

Again, because of the particular shape of the invention, the seeds can be germinated (with the trays 1 stacked) either indoors or outdoors. In the former case it does not matter if the stack is arranged close to other stacks or to a wall, whereas in the second case either an empty tray 1 must be placed on the stack 100 or the last tray be covered with a suitable covering such as a hood.

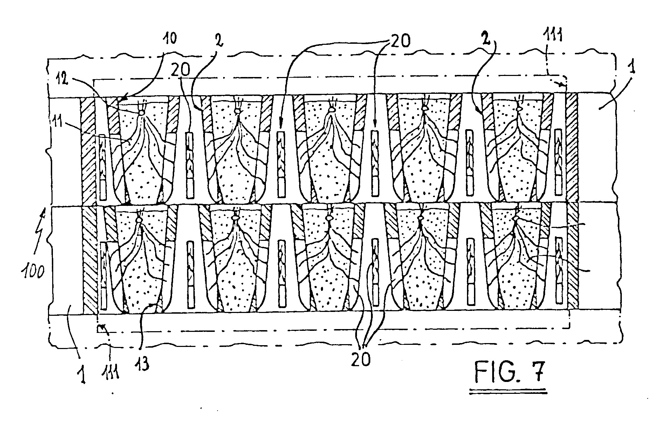

Such a covering or hood is indicated by 3 in Figures 9 and 10, and during said outdoor germination it may be convenient to provide said hood 3 with a suction device 30 to produce a slight suction within this latter and thus along the cavities 2 of the tray 1. The subsequent sprouting with the trays placed side by side on flat lattice frames is then effected in suitable indoor environments.

With reference to Figure 10 it will also be seen that the invention enables germination to be effected outdoors even during inclement seasons.

For this purpose it is necessary merely to place the stack of trays 1 between a lower feed structure 31 and a suction hood 3, these being connected together by a duct 32 containing a fan unit 30, and housing an adjustable electrical resistance element 33.

With reference to Figure 7 it can be seen that to improve the ventilation of the cells 10 along the perimetral edge of the trays, a perimetral rib can be provided extending along the entire upper or lower perimetral edge of the trays, to keep the lower mouths of the holes 13 of a tray slightly spaced from the upper mouths of the cells 10 of the underlying tray.

In Figure 7 this perimetral rib is indicated by 111 and represented by dashed and dotted lines.

In addition, it can be seen in Figures 1 and 3 that the respective cavities 2 are lacking at some points of the tray 1, and in particular at the corners. This is because the mould expelling devices act in these regions.

According to the invention, optimum aeration of the cells 10 adjacent to said regions is ensured by the upper transverse grooves indicated by 60 in Figures 1 and 3. However, in the alternative embodiment shown in Figures 6 to 8 said grooves 60 are superfluous.

With reference to the alternative embodiment shown in Figures 1, 4 and 5, it can be seen that the same results as those obtained with the "trumpet-shaped" cavities can also be obtained by providing a corresponding series of radial grooves between the upper mouth of each cavity 2 and the respective surrounding group of cells 10.

These grooves are indicated by 66 in said figures, said grooves 66 also being shown by dashed lines in Figure 3.

Said grooves 66 can be provided for cavities 2 of either trumpet shape as shown in Figures 1, 2, 6 and 7, or frusto-conical shape.

With reference to Figures 6, 7, 8, in accordance with one advantageous characteristic of the invention, each cell 10 communicates with a series of transverse passages or apertures 20, these in the represented case being four in number and circumferentially equidistant (see Figure 8), which open at their other end into the corresponding adjacent set of cavities 2.

It should be noted that said apertures 20 are formed during the moulding of the tray 1 by providing those male parts used to shape the cavities 2 with longitudinal ribs to fit into respective seats provided in those male parts used to form the cells 10.

By virtue of said apertures 20, during germination most of the plant roots extend naturally into these apertures and into the holes 13, with the advantages stated in the introduction.

In this respect, the roots extend towards said apertures even if they encounter the cell wall along their growth direction, because the roots bend to follow said wall until they encounter either an aperture 20 or the hole 13, where they stop.

The germination core then produces further roots, so that the mass of peat or mould is traversed by several roots, ensuring improved mechanical extraction of the plants from below. Plant extraction from above is also improved because the tray formed in accordance with the invention prevents the formation of the plaited root cup mentioned in the introduction, so that the clinging of the roots to the rough parts of the cell is greatly reduced.

Again, the presence of the apertures 20 in combination with the drainage hole 13 means that the plants can be watered by immersing the tray.

## Claims

1. A germination tray, of the type for stacking together with other identical trays, and comprising a plate (1) containing a plurality of upwardly flared seeding cells (10) each provided lowerly with a hole (13) for the discharge of water and a plurality of vertical through passages (2) which are interposed between said cells (10) and connecting the upper and lower faces of the plate to allow air to flow upwards therethrough, said passage being downwardly flared, characterised in that said passages have an enlarged lower mouth so as to partly overlie the surrounding cells (10) of an identical underlying tray in a stack, such that aeration ports are created which connect the cells to the passages of the same tray.

2. A tray as claimed in claim 1, characterised in that said passages (2) communicate with the interior of the surrounding cells (10) via transverse apertures (20).

## Patentansprüche

1. Keimbehälter in der Art, daß er mit anderen identischen Behältern zusammen stapelbar ist, und mit einer Platte (1), die eine Anzahl von nach oben sich erweiternden Aussaatzellen (10) aufweist, wovon jede unten mit einem Loch (13) für den Ablauf von Wasser versehen ist, und mit einer Anzahl von vertikalen Durchgangslöchern (2), die zwischen den Zellen (10) angeordnet sind und die die Ober- und die Unterseite der Platte miteinander verbinden, um durch sie hindurch einen nach oben gerichteten Luftstrom zu ermöglichen, wobei die Löcher nach unten erweitert sind,
**dadurch gekennzeichnet,** daß die Löcher eine erweiterte untere Mündung haben, damit sie teilweise über den umgebenden Zellen (10) eines identischen, in einem Stapel darunterliegenden Behälters liegen, so daß Belüftungsöffnungen gebildet sind, welche die Zellen mit den Durchgangslöchern des gleichen Behälters verbinden.

2. Behälter nach Anspruch 1,
**dadurch gekennzeichnet,** daß die Durchgangslöcher (2) mit dem Inneren der umgebenden Zellen (10) über querliegende Öffnungen (20) in Verbindung stehen.

## Revendications

1. Plateau de germination, du type permettant l'empilage les uns sur les autres de plateaux identiques, et comprenant une plaque (1) comprenant une pluralité de cellules (10) d'ensemencement allant en s'évasant vers le haut, chaque cellule comprenant en position inférieure un trou (13) pour l'évacuation de l'eau et une pluralité de passages traversants (2) qui sont interposés entre lesdites cellules (10) et qui relient les faces supérieure et inférieure de la plaque de façon à permettre à l'air de s'écouler vers le haut à travers ces passages, lesdits passages allant en s'évasant vers le bas, ledit plateau étant caractérisé en ce que lesdits passages comportent une embouchure inférieure élargie de façon à recouvrir en partie les cellules avoisinantes (10) d'un plateau identique placé en dessous dans une pile, de telle façon que des ouvertures d'aération soient créées qui relient les cellules aux passages du même plateau.

2. Plateau selon la revendication 1 caractérisé en ce que lesdits passages (2) communiquent avec l'intérieur des cellules (10) avoisinantes via des ouvertures transversales (20).
